# EUROPÄISCHE PATENTANMELDUNG

(11) **EP 4 834 575 A1**
(43) Veröffentlichungstag der Anmeldung: **04.11.2026**
(21) Anmeldenummer: 25173379.6
(22) Anmeldetag: 29.04.2025
(51) Int. Cl.: B32B 3/04, B32B 7/03, B32B 7/12, B32B 29/00, B32B 29/08

(54) **PAPPVERBUNDMATERIAL UND BEHÄLTER MIT PAPPVERBUNDMATERIAL**

(71) Anmelder: BayPack GmbH, 87778 Stetten (DE)
(72) Erfinder: Schuster, Andreas, 87778 Stetten (DE)
(74) Vertreter: RGTH

(57) **Zusammenfassung**

Um ein Pappmaterial bereitzustellen, welches eine verbesserte Stabilität aufweist, wird ein Pappverbundmaterial (100) vorgeschlagen, aufweisend wenigstens eine erste Lage (10), wobei die erste Lage (10) Vollpappe umfasst und eine zweite Lage (11), wobei die zweite Lage Wellpappe umfasst, wobei eine Laufrichtung der Vollpappe nicht parallel, insbesondere senkrecht, zu einer Laufrichtung der Wellpappe verläuft.

## Beschreibung

Die Erfindung betrifft ein Pappverbundmaterial, ein Verfahren zur Herstellung eines solchen Pappverbundmaterials und einen Behälter umfassend ein solches Pappverbundmaterial.

Aus dem Stand der Technik sind im Bereich der Materialtechnik verschiedene Materialkonstruktionen bekannt, welche Fasermaterialien bzw. Pappmaterialien umfassend und für unterschiedliche Anwendungen ausgelegt sind. Pappmaterialien sind häufig im Hinblick auf die einfache Herstellung optimiert, um insbesondere Pappverbundmaterialien, welche für eine kurze Nutzungsdauer ausgelegt sind, kostengünstig herzustellen. Bei mehrschichtigen Pappverbundmaterialien werden dabei meist mehrere Schichten direkt auf einer Maschine hergestellt und noch auf der Maschine miteinander verbunden.

Allerdings kommen Pappverbundmaterialien vermehrt auch bei Anwendungen zum Einsatz, in denen eine hohe Materialstabilität im Vordergrund steht. Insbesondere ist dies der Fall, wenn ein aus einen Pappmaterial gefertigtes Produkt mehrfach verwendbar sein soll und/oder hohe Lasten aufnehmen können soll.

Der Erfindung liegt daher die Aufgabe zugrunde, ein Pappmaterial bereitzustellen, welches eine verbesserte Stabilität aufweist.

Die erfindungsgemäße Aufgabe wird gelöst durch ein Pappverbundmaterial, aufweisend wenigstens eine erste Lage, wobei die erste Lage Vollpappe umfasst und eine zweite Lage, wobei die zweite Lage Wellpappe umfasst, wobei eine Laufrichtung der Vollpappe nicht parallel, insbesondere senkrecht, zu einer Laufrichtung der Wellpappe verläuft.

Eine Lage ist insbesondere eine flächige Materialschicht. Insbesondere sind die Lagen eigenständige Schichten, welche strukturell betrachtet separate Materialien darstellen, welche miteinander verbunden sind bzw. werden, um das Pappverbundmaterial zu bilden. Insbesondere sind die Lagen somit unabhängig voneinander hergestellt und werden in einem weiteren Verfahrensschritt, welcher insbesondere nicht auf einer Papierherstellungsmaschine erfolgt, zu dem Pappverbundmaterial zusammengesetzt.

Das Pappverbundmaterial ist entsprechend ebenfalls ein flächiges Material, welches beispielsweise in Form eines Materialbogens vorliegt, welcher für die jeweilige Anwendung zugeschnitten werden kann.

Die Laufrichtung der Lagen bezieht sich auf eine Orientierungsrichtung bzw. auf eine Hauptorientierungsrichtung der Fasern der jeweiligen Lage. Die Laufrichtung ist insbesondere bedingt durch die Herstellung und entspricht insbesondere einer Produktionsrichtung, in welcher das herzustellende Material bzw. die Materialbahn über die Herstellungsmaschine läuft. Somit werden die erste und die zweite Lage insbesondere nicht gleichzeitig auf der Herstellungsmaschine hergestellt, da die Lagen ansonsten die gleiche Laufrichtung aufweisen würden.

Bevorzugt sind die Laufrichtungen der ersten Lage und der zweiten Lage nicht parallel zueinander angeordnet, sondern schließen einen Winkel innerhalb einer Ebene parallel zur ersten und zweiten Lage ein, welcher größer Null ist. Der Winkel beträgt insbesondere wenigstens 10°, wenigstens 30°, wenigstens 45°, wenigstens 60° oder wenigstens 80°. Bevorzugt verlaufen die Laufrichtungen der ersten Lage und der zweiten Lage senkrecht zueinander und schließen somit einen Winkel von 90° ein.

Durch die nicht parallele Anordnung der Laufrichtungen weist das Pappverbundmaterial vorteilhaft eine besonders hohe Stabilität auf, da sich das Pappmaterial entlang der Laufrichtung besser verbiegen lässt als senkrecht dazu. Dadurch, dass die Laufrichtungen nicht parallel zueinander verlaufen, lässt sich das Pappmaterial in der Ebene weniger leicht verbiegen.

Eine Vollpappe ist insbesondere eine massive Pappe. Die Vollpappe kann insbesondere einlagig oder mehrlagig oder mehrschichtig sein. Ist die Vollpappe mehrlagig, sind die Lagen insbesondere durch Kleben oder Gautschen miteinander verbunden. Bevorzugt ist die Vollpappe oder deren Lagen ein gegossenes Material. Insbesondere weist die Vollpappe eine homogene Struktur auf.

Das Flächengewicht beträgt insbesondere zwischen 250 g/m³ und 3500 g/m³, bevorzugt zwischen 500 g/m³ und 3000 g/m³. Die Stärke bzw. Dicke beträgt insbesondere zwischen 0,3 mm und 4,5 mm, bevorzugt zwischen 0,5 mm und 4 mm. Bevorzugt weist die Vollpappe eine Dichte zwischen 0,5 g/cm³ und 1,5 g/cm³, besonders bevorzugt zwischen 0,65 g/cm³ und 1,2 g/cm³, auf.

Bevorzugt umfasst die Vollpappe und/oder die Wellpappe Frischfasern und/oder Altpapierfasern. Alternativ kann die Vollpappe und/oder die Wellpappe aus Frischfasern und/oder Altpapierfasern bestehen.

Die Wellpappe umfasst bevorzugt zumindest eine Wellenbahn. Bevorzugt umfasst die Wellpappe wenigstens eine glatte Papierbahn, welche mit der Wellenbahn verbunden ist. Bevorzugt kann die Wellpappe zwei glatte Papierbahnen umfassen, zwischen denen die Wellenbahn angeordnet ist. Ferner kann die Wellpappe auch mehrere, beispielsweise zwei, Wellenbahnen umfassen. Die weitere Wellenbahn kann mit einer der vorgenannten glatten Papierbahnen verbunden sein. Ferner kann die weitere Wellenbahn eine oder zwei zusätzliche glatte Papierbahnen umfassen, welche mit der Wellenbahn einseitig oder beidseitig verbunden sind.

Die Laufrichtung der Wellpappe bezieht sich bevorzugt auf die Laufrichtung innerhalb der Wellenbahn und/oder innerhalb der glatten Papierbahn. Die Wellenbahn und die glatte Papierbahn oder Papierbahnen können eine gleiche Laufrichtung aufweisen oder die Laufrichtungen können nicht parallel, insbesondere senkrecht, zueinander verlaufen. Analoges gilt insbesondere für die Laufrichtungen innerhalb der Vollpappe, sofern diese mehrlagig ausgebildet ist. Somit können auch innerhalb einer der Lagen unterschiedliche Laufrichtungen vorgesehen sein, solange wenigstens eine Laufrichtung innerhalb der ersten Lage nicht parallel zu einer Laufrichtung innerhalb der zweiten Lage ist. Bevorzugt sind sämtliche Laufrichtungen einer Lage nicht parallel zu sämtlichen Laufrichtungen der anderen Lage angeordnet.

Bevorzugt umfasst die erste Lage ausschließlich die Vollpappe. Bevorzugt umfasst die zweite Lage ausschließlich die Wellpappe.

Bevorzugt umfasst das Pappverbundmaterial ausschließlich die erste Lage und die zweite Lage.

Im einfachsten Fall umfasst das Pappverbundmaterial ausschließlich die erste Lage mit einer einzigen Schicht aus Vollpappe und die zweite Lage mit einer einzigen Schicht aus Wellpappe. Es sind insbesondere keine weiteren Lagen vorgesehen.

Bevorzugt sind die erste Lage und die zweite Lage miteinander verklebt.

Bevorzugt ist die erste Lage bezogen auf dessen flächige Erstreckung größer ausgebildet als die zweite Lage, sodass die erste Lage Nicht-Überlappungsbereiche mit der zweiten Lage aufweist, in denen bezogen auf eine flächige Erstreckung des Pappverbundmaterials die erste Lage nicht mit der zweiten Lage überlappt. Die Nicht-Überlappungsbereiche sind insbesondere an einem Kantenbereich der zweiten Lage angeordnet. Bevorzugt wird die zweite Lage ansonsten vollständig von der ersten Lage abgedeckt. Ferner kann die zweite Lage jedoch auch Nicht-Überlappungsbereiche mit der ersten Lage aufweisen.

Die Nicht-Überlappungsbereiche stellen vorteilhaft Abschnitte der ersten Lage dar, welche je nach Verwendung des Pappverbundmaterials auf verschiedene Weise funktional verwendet werden können. Beispielsweise können die Abschnitte der Nicht-Überlappungsbereiche als Verbindungslaschen verwendet werden zum Verbinden des Pappverbundmaterials mit einem anderen Material. Ferner kann das Pappverbundmaterial zu einem Gegenstand, beispielsweise einem Behälter, gefaltet werden. In diesem Fall können die Nicht-Überlappungsbereiche zum Verbinden von Faltabschnitten verwendet werden und/oder es können Verstärkungsbereiche gebildet werden.

Auch können die Nicht-Überlappungsbereiche derart ausgestaltet sein, dass die erste Lage die zweite Lage vollständig umgibt. Insbesondere kann die erste Lage somit eine Decklage der zweiten Lage darstellen, beispielsweise zu dekorativen Zwecken und/oder um das Pappverbundmaterial bedrucken zu können.

Bevorzugt sind die Nicht-Überlappungsbereiche der ersten Lage um eine Außenkante der zweiten Lage gelegt, sodass die zweite Lage bereichsweise beidseitig von der ersten Lage umgeben ist.

Insbesondere kann der umgeklappte Faltabschnitt mit der zweiten Lage verklebt sein. In diesen Bereichen ist des Faltelement somit insbesondere dreilagig aufgebaut mit der zweiten Lage als Innenlage und der ersten Lage als äußere Lagen bzw. Decklagen.

Dieser dreischichtige Aufbau kann insbesondere als eine bereichsweise Verstärkung dienen und/oder dort vorgesehen sein, wo die erste Lage beidseitig von außen sichtbar sein soll, insbesondere aus dekorativen bzw. optischen Gründen. Solche Bereiche können beispielsweise Seitenflächen, Deckelflächen und/oder Bodenflächen eines Behälters sein, welcher aus dem Pappverbundmaterial gebildet ist. Wären die erste und die zweite Lage identisch ausgebildet, wäre eine solche Verstärkung nur durch bereichsweises Umklappen der gesamten Pappmaterialverbundlage möglich, wobei sich das Material stark aufbauen würde.

Bevorzugt weist die Wellpappe eine Wellenteilung zwischen 2 und 4 mm, bevorzugt zwischen 2,3 mm und 3,7 mm, besonders bevorzugt zwischen 2,6 mm und 3,5 mm, und/oder einer Wellenhöhe zwischen 0,5 mm und 2,5 mm, bevorzugt zwischen 0,7 mm und 2,3 mm, besonders bevorzugt zwischen 1,0 mm und 1,9 mm, auf.

Die Wellpappe entspricht bevorzugt einer E-Welle nach DIN-Form. Insbesondere ist die Wellpappe eine Feinstwelle oder Mikrowelle mit einer Wellenteilung zwischen 2,6 und 3,5 mm und/oder einer Wellenhöhe zwischen 1,0 mm und 1,9 mm. Die Wellenteilung ist dabei der Abstand zwischen zwei Wellenspitzen bzw. zwischen zwei Wellentälern. Eine Wellenhöhe ist der Abstand zwischen einer Wellenspitze und einem Wellental.

Bevorzugt umfasst die Wellpappe eine Wellenbahn, eine Außenschicht und eine Innenschicht. Die Innenschicht ist insbesondere mit der Vollpappe verbunden, beispielsweise verklebt. Die Außenschicht und die Innenschicht sind insbesondere glatte Papierbahnen.

Bevorzugt weist die Vollpappe eine Dicke zwischen 0,2 mm und 5 mm, bevorzugt zwischen 0,35 mm und 4,5 mm, besonders bevorzugt zwischen 0,5 mm und 4 mm, auf.

Bevorzugt weist die Wellpappe eine Dicke zwischen 0,4 mm und 2,6 mm, bevorzugt zwischen 0,6 mm und 2,4 mm, besonders bevorzugt zwischen 0,9 mm und 2 mm, auf

Bevorzugt weist das Pappverbundmaterial eine Dicke zwischen 0,6 mm und 8 mm, bevorzugt zwischen 0,9 mm und 7 mm, besonders bevorzugt zwischen 1,4 mm und 6 mm, auf.

Die erfindungsgemäße Aufgabe wird ferner gelöst durch ein Verfahren zur Herstellung eines Pappverbundmaterials nach einer der vorgenannten Ausführungsformen, umfassend die folgenden Schritte:
- Herstellung der ersten Lage umfassend die Vollpappe,
- Herstellung der zweiten Lage umfassend die Wellpappe, und
- anschließendes Verbinden der ersten Lage und der zweiten Lage, derart, dass eine Laufrichtung der Vollpappe senkrecht zu einer Laufrichtung der Wellpappe angeordnet ist.

Das Verfahren zeichnet sich insbesondere dadurch aus, dass die erste Lage und die zweite Lage unabhängig voneinander, das heißt insbesondere zeitlich versetzt und unterschiedlichen Herstellungsvorgängen, hergestellt werden. Insbesondere werden die beiden Lagen separat voneinander hergestellt und vollständig zu einem fertigen Pappmaterial getrocknet. Insbesondere werden die beiden Lagen nicht gleichzeitig auf der gleichen Papierherstellungsmaschine hergestellt, sondern nacheinander und/oder auf unterschiedlichen Papierherstellungsmaschinen. Insbesondere wird die erste Lage nicht durch direkten Auftrag bzw. Aufbringung auf die zweite Lage in der Papierherstellungsmaschine hergestellt.

Darüber hinaus wird die erfindungsgemäße Aufgabe gelöst durch einen Behälter aufweisend ein Pappverbundmaterial nach einer der vorbeschriebenen Ausführungsformen. Der Behälter kann vollständig oder zumindest teilweise das Pappverbundmaterial aufweisen.

Bevorzugt ist der Behälter ein Faltbehälter umfassend einen Boden und sich von dem Boden erstreckende Seitenwände, wobei der Boden und die Seitenwände aus dem Pappverbundmaterial gebildet sind, wobei an wenigstens einer oder an beiden von zwei sich gegenüberliegenden ersten und zweiten Seitenwänden jeweils eine Befestigungseinrichtung angeordnet ist, wobei die Befestigungseinrichtung wenigstens eine erste und eine zweite Befestigungskomponente aufweist, welche zur Verbindung miteinander ausgebildet sind, wobei die erste und die zweite Seitenwand jeweils einen äußeren Seitenwandabschnitt, welcher in einem Benutzungszustand des Faltbehälters eine Außenseite der Seitenwand bildet, und einen inneren Seitenwandabschnitt, welcher in einem Benutzungszustand des Faltbehälters eine Innenseite der Seitenwand bildet, aufweist, wobei jeweils die erste Befestigungskomponente an dem inneren Seitenwandabschnitt und die zweite Befestigungskomponente an dem äußeren Seitenwandabschnitt angeordnet ist, derart, dass die erste Befestigungskomponente und die zweite Befestigungskomponente im Benutzungszustand des Faltbehälters und in einem Lagerzustand des Faltbehälters miteinander verbindbar sind, um den Faltbehälter in dem Benutzungszustand und dem Lagerzustand in seiner Form zu fixieren.

Der Faltbehälter ermöglicht es auf vorteilhafte Weise, von einem Benutzungszustand in einen Lagerzustand überführt zu werden und in den jeweiligen Zuständen in seiner Form fixiert zu werden mittels der beiden Befestigungseinrichtungen, welche an sich gegenüberliegenden Seitenflächen angeordnet sind. Besonders vorteilhaft ist insbesondere, dass zwei Befestigungseinrichtungen vorgesehen sind, welche es ermöglichen, dass der Faltbehälter insbesondere im Lagerzustand in einer kompakten Form gehalten wird. Insbesondere sind die Seitenwände des Faltbehälters fixiert und stehen nicht von dem ansonsten im Wesentlichen flach auseinandergefalteten Faltbehälter hervor.

Der Benutzungszustand des Faltbehälters ist insbesondere ein Zustand, in dem der Faltbehälter bestimmungsgemäß benutzt werden kann, beispielsweise zur Aufnahme von Objekten bzw. Gegenständen. Im Benutzungszustand ist der Faltbehälter insbesondere zusammengefaltet.

Der Lagerzustand ist insbesondere ein Zustand, in dem der Faltbehälter auseinandergefaltet in einer flachen Konfiguration vorliegt, um gelagert bzw. transportiert zu werden, wenn der Faltbehälter nicht benutzt wird. Der Lagerzustand entspricht insbesondere nicht dem vollständig auseinander gefalteten Zustand, in dem das Faltelement, aus dem der Faltbehälter gebildet ist, vollständig flach bzw. eben vorliegt. Im Lagerzustand sind Faltabschnitte des Faltelements umgefaltet, derart, dass der Faltbehälter eine flache Konfiguration aufweist.

Bevorzugt weist der Faltbehälter im Lagerzustand eine flache Form und insbesondere eine rechteckige Form auf in einer Draufsicht auf den Boden. Dadurch ist der Faltbehälter vorteilhaft lagerbar, da keine Laschen oder ähnliches nach außen von dem Faltbehälter hervorstehen.

Der Faltbehälter umfasst bevorzugt genau vier Seitenwände. Eine Seitenwand kann aus einem Seitenwandabschnitt oder mehreren Seitenwandabschnitten gebildet sein. Beispielsweise kann eine Seitenwand aus zwei oder drei Seitenwandabschnitten gebildet sein, welche relativ zueinander gefaltet sind und aneinander liegend die Seitenwand bilden.

Der Faltbehälter wird insbesondere aus einem flächigen Faltelement bzw. Faltbogen gebildet. Die Seitenwandabschnitte sind insbesondere Faltabschnitte eines solchen Faltelements. Ein Seitenwandelement ist insbesondere ein flächiger bzw. ebener Abschnitt. Aus dem Faltelement kann durch Falten bzw. Umklappen der Faltabschnitte der Faltbehälter gebildet werden. Gegebenenfalls sind einige Faltabschnitte durch Kleben oder Stecken miteinander verbunden, um das Faltelement zu bilden. Das Faltelement ist insbesondere wenigstens ein Schnittbogen, aus dem der Faltbehälter zusammengefaltet wird und gegebenenfalls teilweise geklebt wird. Das Faltelement ist insbesondere aus dem Pappverbundmaterial gebildet.

Bevorzugt ist der Faltbehälter eine Kiste, eine Box oder eine Schachtel. Bevorzugt kann es sich bei dem Faltbehälter insbesondere um eine Steige handeln zur Lagerung und zum Transport von Lebensmitteln, insbesondere Obst und Gemüse.

Bevorzugt sind die Befestigungskomponenten der Befestigungseinrichtung lösbar miteinander verbindbar, insbesondere durch Kraftschluss und/oder Formschluss. Insbesondere werden die Befestigungskomponenten miteinander verbunden, um die Seitenflächenabschnitte des Faltbehälters in dem Lagerzustand bzw. dem Benutzungszustand zu arretieren.

Bevorzugt umfasst die erste und/oder die zweite Befestigungseinrichtung Magneten und/oder einen Klettverschluss. Bevorzugt können die Befestigungselemente zwei Magnetverschlusselemente bzw. zwei Klettverschlusselemente sein. Ein Magnetverschluss bzw. ein Klettverschluss ist insbesondere vorteilhaft, da diese durch einfaches Drücken bzw. Ziehen der Seitenflächenabschnitte verbunden bzw. gelöst werden können.

Bevorzugt bildet die erste Lage die Außenseite der Seitenwände.

Nachfolgend wird die Erfindung anhand von Ausführungsbeispielen näher erläutert. Es zeigen in:
- Fig. 1: eine Querschnittsdarstellung durch ein Pappverbundmaterial,
- Fig. 2: eine Draufsicht auf eine erste Lage eines Faltbehälters in einem flach ausgebreiteten Zustand,
- Fig. 3: eine Draufsicht auf eine zweite Lage eines Faltbehälters in einem flach ausgebreiteten Zustand, und
- Fig. 4: eine Draufsicht auf ein Faltelement umfassend die erste und die zweite Lage.

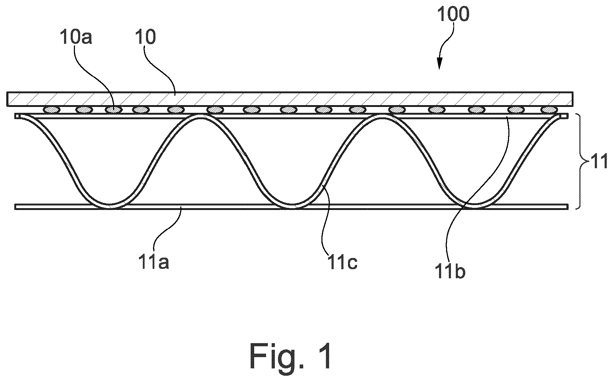

Figur 1 zeigt eine schematische Querschnittsdarstellung durch ein Pappverbundmaterial 100. Das Pappverbundmaterial 100 umfasst eine erste Lage 10, welche eine Vollpappe ist. Ferner umfasst das Pappverbundmaterial 100 eine zweite Lage 11, welche eine Wellpappe ist. Die Wellpappe umfasst eine Wellenbahn 10c, welche von zwei äußeren Papierbahnen 10a, 10b umgeben ist. Eine der Papierlagen 10a ist mit der Vollpappe 10 mittels einer Klebeschicht 10a verklebt.

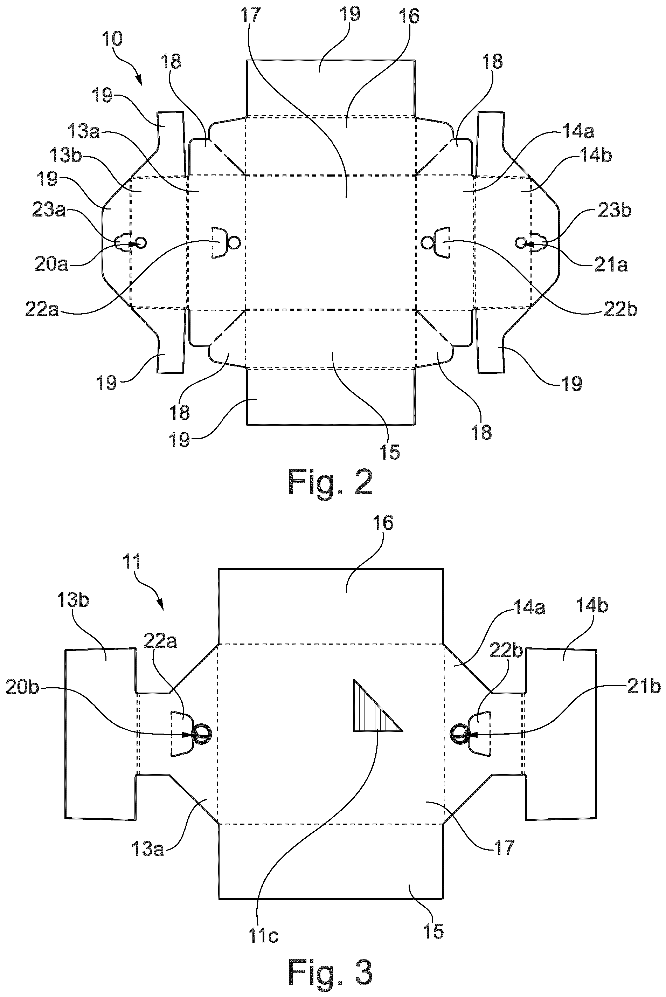

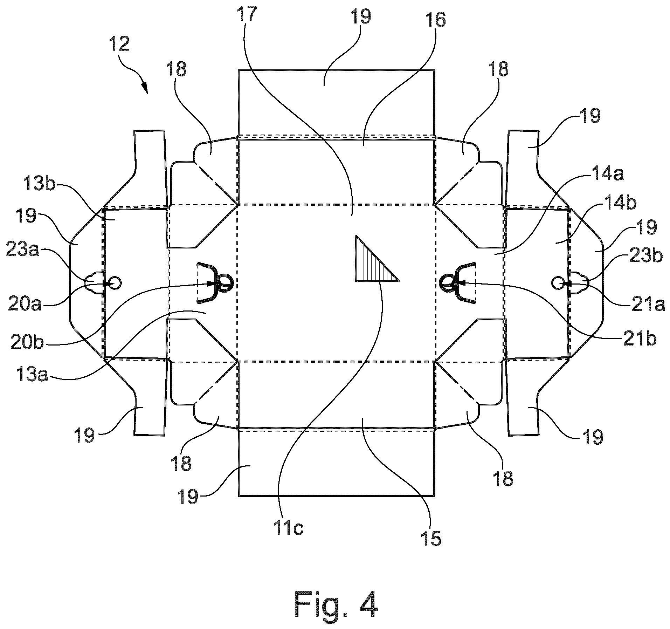

Figur 2 zeigt eine erste Lage 10 eines Faltbehälters, welcher zusammen mit der zweiten Lage 11 gemäß Figur 3 das in Figur 4 gezeigte Faltelement 12 bildet. Das Faltelement 12 ist durch die aufeinandergelegten Faltlagen 10, 11 gebildet und stellt ein Pappverbundmaterial 100 wie in Figur 1 gezeigt dar.

Die erste Lage 10 umfasst einen Boden 17 sowie Seitenwände 13, 14, 15, 16. Eine erste Seitenwand 13 und eine zweite Seitenwand 14 sind jeweils durch äußere Seitenwandabschnitte 13a, 14a und innere Seitenwandabschnitte 13b, 14b gebildet, welche beim Wechsel zwischen dem Benutzungszustand und dem Lagerzustand des Faltbehälters 100 relativ zueinander gefaltet werden können. An den inneren Seitenwandflächen 13b, 14b, welche an den Boden 17 angrenzen und Innenseiten des Faltbehälters darstellen, sind jeweils Durchgangsöffnungen 22a, 22b angeordnet, durch welche im Benutzungszustand von außen eine Kraft auf den inneren Seitenwandabschnitt 13b, 14b ausgeübt werden kann, um Befestigungseinrichtungen an der ersten und der zweiten Seitenwand 13, 14 zu lösen.

Ferner sind an den inneren Seitenwandabschnitten 13b, 14b im Bereich einer äußeren Kante Zugelemente 23a, 23b angeordnet, welche durch einen laschenförmigen Materialausschnitt aus der ersten Lage 10 gebildet sind.

Die Befestigungseinrichtungen weisen jeweils Befestigungskomponenten 20a, 20b, 21a, 21b auf, welche lösbar miteinander verbindbar sind. Beispielsweise können die Befestigungskomponenten 20a, 21a Metallelemente und die Befestigungskomponenten 20b, 21b Magnete sein, welche miteinander verbunden werden können, wenn die inneren und äußeren Seitenwandabschnitte, 13a, 14a, 13b, 14b aufeinanderliegen. Dabei sind die Befestigungskomponenten 20a, 21a an der ersten Lage 10 in Figur 2 angeordnet und die Befestigungskomponenten 20b, 21b an der in Figur 3 gezeigten zweiten Lage 11.

Die erste Lage 10 und die zweite Lage 11 sind bezogen auf den flach auseinandergefalteten Zustand wie in Figuren 2 und 3 dargestellt nicht deckungsgleich ausgebildet. Die erste Lage 10 weist Nicht-Überlappungsbereiche 19 mit der zweiten Lage 11 auf, in denen die erste Lage 10 über die zweite Lage 11 heraussteht wie in Figur 3 dargestellt, welche das aus der ersten und der zweiten Lage 10, 11 gebildete Faltelement 12 zeigt. Diese Nicht-Überlappungsbereiche 19 sind insbesondere nach außen hervorstehende Laschen, welche um die zweite Lage 11 herumgelegt werden können. In Figur 3 ist das Faltelement 12 dargestellt und die umgeklappten Nicht-Überlappungsbereiche 19.

Die Nicht-Überlappungsbereiche 19 umfassen Eckfaltbereiche 18, welche jeweils zwischen den Seitenwänden 13, 14, 15, 16 angeordnet und nach innen gefaltet und abschnittweise an einer Innenseite des äußeren Seitenwandabschnitts 13a, 14a verklebt werden können. Ferner sind an den äußeren Seitenwandabschnitten 13a, 14a Nicht-Überlappungsbereiche 19 in Form von Laschen angeordnet, welche umgefaltet werden können um die äußeren Seitenwandabschnitte 13a, 14a der zweiten Lage 11, sodass die zweite Lage 11 in diesem Bereich vollständig von der ersten Lage 11 umgeben ist.

Ferner weisen eine dritte und eine vierte Seitenwand 15, 16 Nicht-Überlappungsbereiche 19 auf, welche um die Seitenwände 15, 16 der zweiten Lage 11 umgelegt werden können, sodass die zweite Lage 11 im Bereich der dritten und vierten Seitenwand 15, 16 von der ersten Lage 10 umgeben sind.

Die erste Lage 10 kann insbesondere eine Lage aus Vollpappe sein, während die zweite Lage 11 eine Lage aus Wellpappe ist. In Figur 3 ist die Orientierung der Wellenbahn 10c dargestellt. Die Wellen erstrecken sich senkrecht zu der ersten und zweiten Seitenwand 13, 14, welche hier Kurzseiten des Faltbehälters sind. Wellentäler bzw. Wellenberge erstrecken sich parallel zu der ersten bzw. zweiten Seitenwand 13, 14.

### Bezugszeichenliste

- 100: Pappverbundmaterial

- 10: erste Lage
- 10a: Klebeschicht
- 11: zweite Lage
- 11a, b: Papierbahnen
- 11c: Wellenbahn
- 12: Faltelement
- 13: erste Seitenwand
- 13a: äußerer Seitenwandabschnitt
- 13b: innerer Seitenwandabschnitt
- 14: zweite Seitenwand
- 14a: äußerer Seitenwandabschnitt
- 14b: innerer Seitenwandabschnitt
- 15: dritte Seitenwand
- 16: vierte Seitenwand
- 17: Boden
- 18: Eckfaltabschnitte
- 19: Nicht-Überlappungsbereiche

- 20a,b,c: Befestigungskomponenten
- 21a,b,c: Befestigungskomponenten
- 22a, b: Durchgangsöffnungen
- 23a, b: Zugelemente
- 24a, b: oberer Seitenwandabschnitt
- 25a, b: Stützabschnitt
- 26a, b: Grifföffnung

## Patentansprüche

1. Pappverbundmaterial (100), aufweisend wenigstens eine erste Lage (10), wobei die erste Lage (10) Vollpappe umfasst und eine zweite Lage (11), wobei die zweite Lage Wellpappe umfasst, wobei eine Laufrichtung der Vollpappe nicht parallel, insbesondere senkrecht, zu einer Laufrichtung der Wellpappe verläuft.

2. Pappverbundmaterial (100) nach Anspruch 1, wobei die erste Lage (10) und die zweite Lage (11) miteinander verklebt sind.

3. Pappverbundmaterial (100) nach einem der vorgenannten Ansprüche, wobei die erste Lage (10) bezogen auf dessen flächige Erstreckung größer ausgebildet ist als die zweite Lage (11), sodass die erste Lage (10) Nicht-Überlappungsbereiche (19) mit der zweiten Lage (11) aufweist, in denen bezogen auf eine flächige Erstreckung des Pappverbundmaterials (100) die erste Lage (10) nicht mit der zweiten Lage (11) überlappt.

4. Pappverbundmaterial (100) nach einem der vorgenannten Ansprüche, wobei die Nicht-Überlappungsbereiche (19) der ersten Lage (10) um eine Außenkante der zweiten Lage (11) gelegt sind, sodass die zweite Lage (11) bereichsweise beidseitig von der ersten Lage (10) umgeben ist.

5. Pappverbundmaterial (100), wobei die Wellpappe eine Wellenteilung zwischen 2 und 4 mm, bevorzugt zwischen 2,3 mm und 3,7 mm, besonders bevorzugt zwischen 2,6 mm und 3,5 mm, und/oder einer Wellenhöhe zwischen 0,5 mm und 2,5 mm, bevorzugt zwischen 0,7 mm und 2,3 mm, besonders bevorzugt zwischen 1,0 mm und 1,9 mm, aufweist.

6. Pappverbundmaterial (100) nach einem der vorgenannten Ansprüche, wobei die Wellpappe eine Wellenbahn (10c), eine Außenschicht (10b) und eine Innenschicht (10a) umfasst.

7. Pappverbundmaterial (100) nach einem der vorgenannten Ansprüche, wobei die Vollpappe eine Dicke zwischen 0,2 mm und 5 mm, bevorzugt zwischen 0,35 mm und 4,5 mm, besonders bevorzugt zwischen 0,5 mm und 4 mm, aufweist.

8. Pappverbundmaterial (100) nach einem der vorgenannten Ansprüche, aufweisend eine Dicke zwischen 0,6 mm und 8 mm, bevorzugt zwischen 0,9 mm und 7 mm, besonders bevorzugt zwischen 1,4 mm und 6 mm.

9. Verfahren zur Herstellung eines Pappverbundmaterials (100) nach einem der vorgenannten Ansprüche, umfassend die folgenden Schritte:
- Herstellung der ersten Lage (10) umfassend die Vollpappe,
- Herstellung der zweiten Lage (11) umfassend die Wellpappe, und
- anschließendes Verbinden der ersten Lage (10) und der zweiten Lage (11), derart, dass eine Laufrichtung der Vollpappe senkrecht zu einer Laufrichtung der Wellpappe angeordnet ist.

10. Behälter, aufweisend ein Pappverbundmaterial (100) nach einem der vorgenannten Ansprüche.

11. Behälter nach Anspruch 10, umfassend einen Boden (17) und sich von dem Boden (17) erstreckende Seitenwände (13, 14, 15, 16), wobei der Boden (17) und die Seitenwände (13, 14, 15, 15) das Pappverbundmaterial umfassen, wobei an zwei sich gegenüberliegenden ersten und zweiten Seitenwänden (13, 14) jeweils eine Befestigungseinrichtung angeordnet ist, wobei jede der Befestigungseinrichtungen wenigstens eine erste und eine zweite Befestigungskomponente (20a, 20b, 20c, 21a, 21b, 21c) aufweist, welche zur Verbindung miteinander ausgebildet sind, wobei die erste und die zweite Seitenwand (13, 14) jeweils einen äußeren Seitenwandabschnitt (13a, 14a), welcher in einem Benutzungszustand des Faltbehälters (100) eine Außenseite (A) der Seitenwand (13, 14) bildet, und einen inneren Seitenwandabschnitt (13b, 14b), welcher in einem Benutzungszustand des Faltbehälters (100) eine Innenseite (I) der Seitenwand (13, 14) bildet, aufweist, wobei jeweils die erste Befestigungskomponente (20a, 21a) an dem inneren Seitenwandabschnitt (13b, 14b) und die zweite Befestigungskomponente (20b, 21b) an dem äußeren Seitenwandabschnitt (13a, 14a) angeordnet ist, derart, dass die erste Befestigungskomponente (20a, 21a) und die zweite Befestigungskomponente (20b, 21b) im Benutzungszustand des Faltbehälters (100) und in einem Lagerzustand des Faltbehälters (100) miteinander verbindbar sind, um den Faltbehälter (100) in dem Benutzungszustand und dem Lagerzustand in seiner Form zu fixieren.

12. Behälter nach Anspruch 11, wobei die erste und/oder die zweite Befestigungseinrichtung Magneten und/oder einen Klettverschluss umfasst.

13. Behälter nach einem der Ansprüche 10 bis 12, wobei die erste Lage (10) die Außenseite der Seitenwände (13, 14, 15, 16) bildet.
